# EUROPEAN PATENT SPECIFICATION

(11) **EP 1 149 780 B1**
(45) Date of publication and mention of the grant of the patent: **24.03.2004**
(21) Application number: 01108856.4
(22) Date of filing: 09.04.2001
(51) Int. Cl.: B65G 15/64, B65G 39/16

(54) **A belt conveyor**
Bandförderer
Convoyeur à bande

(30) Priority: 24.04.2000 JP 2000122517
(43) Date of publication of application: 31.10.2001
(73) Proprietor: ITOH ELECTRIC CO., LTD., Kasai-shi, Hyogo-ken (JP)
(72) Inventor: ITOH, Kazuo, Hyogo-ken (JP)
(74) Representative: Glawe, Delfs, Moll & Partner

(56) References cited:
- GB-A- 1 500 909
- US-A- 3 968 701
- US-A- 5 320 214

## Description

The present invention relates to an improvement in a belt conveyor of the type in which protrusions on the conveyor belt and holes on the pulley mesh each other.

### [PRIOR ART AND PROBLEMS TO BE SOLVED BY THE INVENTION]

A belt conveyor of the kind referred to initially is known from US-A-5 320 214.

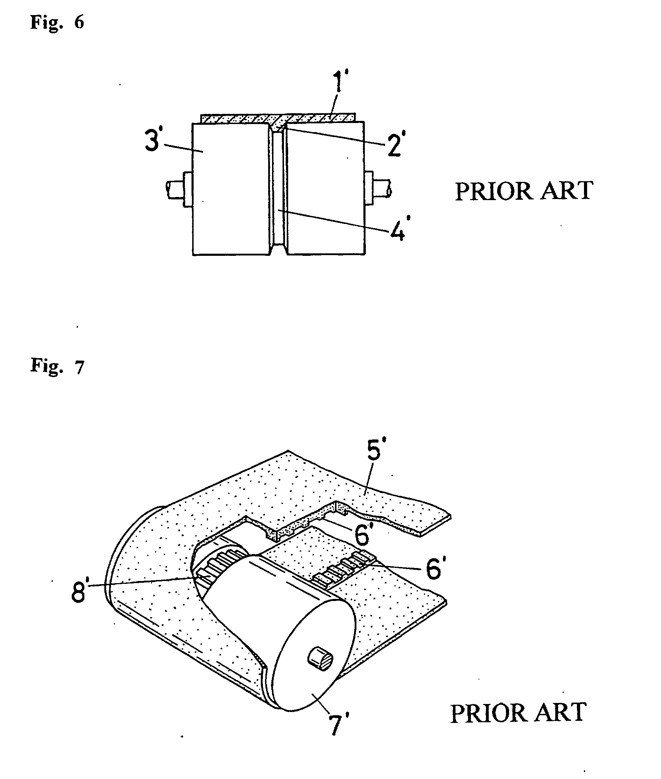

Another belt conveyor is known such as that shown in FIG. 6, in which an elongated protrusion 2' is formed on the rear surface of a conveyor belt 1' (i.e., the surface that slides along the pulley) in the running direction, and this elongated protrusion 2' is fitted into a peripheral groove 4' formed around the periphery of the pulley 3' (e.g., Japanese Utility Model Laid-Open No. 56712/1991).

This belt conveyor is effective enough to prevent the conveyor belt 1' from meandering thanks to the engagement of the protrusion and the indentation, but the engagement is not capable of transmitting the driving force to the conveyor.

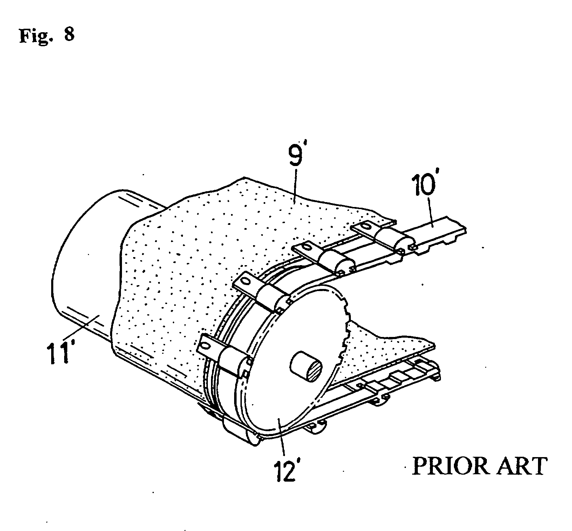

Other types of belt conveyors include the type shown in FIG. 7, in which teeth 6' are formed on the rear surface of the conveyor belt 5', and these teeth 6' are meshed with other teeth 8' formed around the periphery of the pulley 7', as well as the type shown in FIG. 8, in which a cogged belt 10' is positioned on one side of the conveyor belt 9' and a flanged wheel 12' is mounted on one side of the pulley 11' in such a way that the cogs and the flanges are meshed with each other (e.g., Japanese Patent Laid-Open No. 124123/1997).

In these belt conveyor examples, the conveyor belt 5' (FIG. 7) and the conveyor belt 9' (FIG. 8), which is equipped with the cogged belt 10', are each used as a timing belt, and the pulley 7' (FIG. 7) and the pulley 11', which is equipped with the flanged wheel 12' (FIG. 8), are each used as a timing pulley.

In these examples, the cross sectional shape of the teeth is always trapezoid. Because of this, when the driving-force-transmission power weakens or when the belt is stretched out, the belt tension tends to become weak. When this happens, the belt tension needs to be adjusted.

The biggest problem with these belt conveyors is that different types of belts are required for different types of belt conveyors. For example, the belt indicated by code 5' in FIG. 7 and the belts indicated by codes 9' and 10' in FIG. 8 are all different. Different types of belts are also required for meshing the teeth of the timing belt at the centre of the pulley 7' (FIG. 7) and for meshing them at the end of the pulley 7' (not shown).

The first objective of the present invention is to prevent the conveyor belt from meandering as well as to provide a belt conveyor that does not require adjustment of the belt tension. Another objective is to facilitate the manufacture of a driving roller as well as to make it possible to use a common belt for different types of conveyors.

### [MEANS FOR SOLVING THE PROBLEMS]

To achieve the first objective, in the present invention, the protrusions provided on the rear surface of the conveyor belt each comprise inwardly curved front and rear sides tapering towards the free end, and the periphery of the pulley is provided with holes that are shaped so as to fit the protrusions.

In this way, the peculiarly shaped protrusions of the conveyor belt and the holes of the pulley that are shaped so as to fit the protrusions drive the conveyor as they mesh with each other, thus preventing the conveyor belt from meandering. Because the protrusions and the holes of the pulley are always meshed with each other, the belt tension remains constant at all times, eliminating the need for adjustment.

Preferably, the pulley is made of a separate unit that is detachable from the roller.

In this way, the pulley and the roller can be manufactured independently, and the pulley can be easily attached to the roller. Moreover, the holes of the pulley can be made by pressing (burring), a process that simplifies the manufacture of parts.

The conveyor belt, which has a fixed width, may be used alone, or preferably, fastened at a certain position on the rear surface of a flat belt.

In this way, a conveyor for carrying goods can be easily composed using a fixed width conveyor on its own. By fastening the fixed width conveyor belt at a certain position on the rear surface of a flat belt, it is possible to use the same flat belt even when the pulley is mounted at different positions. If this arrangement is not adopted, different flat belts with conveyor belts arranged at different positions must be prepared for when the pulley is arranged at the end of the roller and for when the pulley is arranged at the centre of the roller. But by fastening a fixed width conveyor belt at a certain position on the rear surface of a flat belt, the same flat belt can be used in either of the above cases, making it possible to employ a common part for different applications.

### [PREFERRED EMBODIMENTS OF THE INVENTION]

Preferred embodiments of the present invention will now be described with reference to FIGS. 1 to 5.

### [BRIEF DESCRIPTIONS OF THE DRAWINGS]

- FIG. 1: is a partially cut off perspective view of an example of a conveyor for carrying goods employing two fixed width conveyor belts by themselves on the left- and right-hand sides of the conveyor.
- FIG. 2: is a longitudinal side view of the same example illustrating the way in which the peculiarly shaped protrusions provided on the rear surface of the conveyor belt meshing with the peculiarly shaped holes provided around the periphery of the pulley.
- FIG. 3: is an exploded perspective view of an example in which the pulley, which is a separate unit detachable from the roller, is attached to the roller using mounting bolts.
- FIG. 4: is a partially cut off perspective view of an example, in which two fixed width conveyor belts are fastened onto the rear surface of a flat belt so as to correspond to the pulleys mounted at both ends of the roller, and these conveyor belts 1, 1 are hooked onto the pulleys 3, 3 mounted at both ends of the roller 2.
- FIG. 5: is a partially cut off perspective view in which a fixed width conveyor belt is fastened onto the rear surface of a flat belt so as to correspond to the pulley mounted in the middle of the roller.
- FIG. 6: is a longitudinal section view showing an example of a method for preventing the conveyor belt from meandering in a conventional belt conveyor.
- FIG. 7: is a partially cut off perspective view showing an example of a conventional belt conveyor in which teeth are formed on the rear surface of the conveyor belt and these teeth are engaged with other teeth formed around the periphery of the pulley.
- FIG. 8: is a perspective view showing an example of a conventional belt conveyor in which a cogged belt is placed along one side of the conveyor belt, and a flanged wheel is mounted on one side of the pulley, and the cogs and the flanges are meshed with each other.

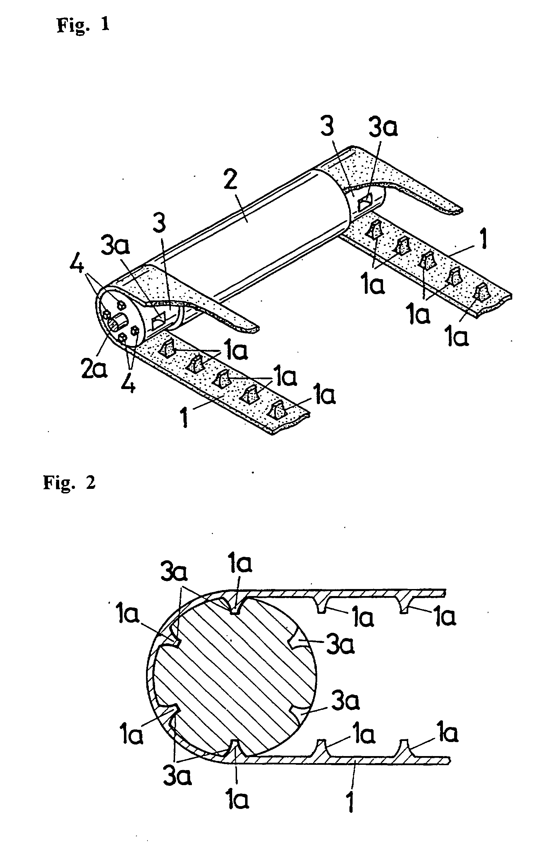

FIGS. 1, 4 and 5 illustrate examples of a conveyor for carrying goods using a fixed width conveyor 1.

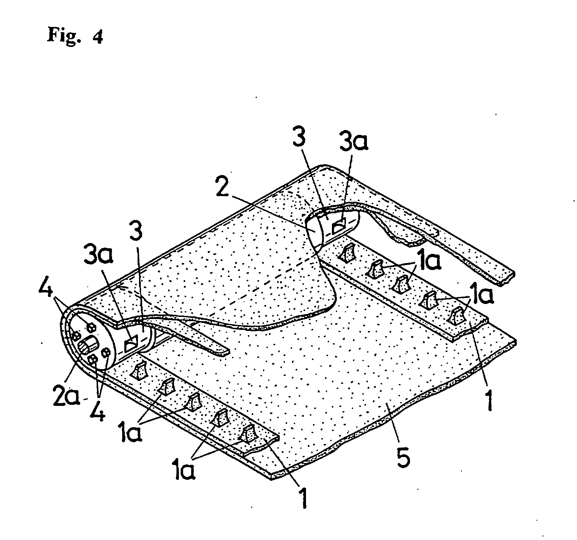

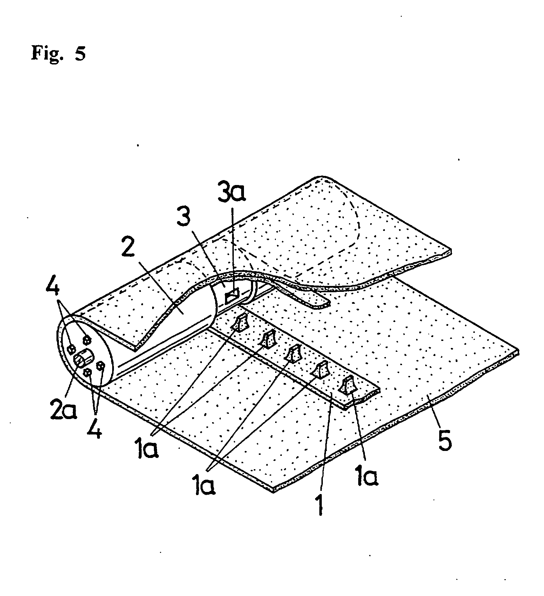

In FIGS. 1 and 4, a roller 2 is equipped with pulleys 3, 3 on both of its sides, and fixed width conveyor belts 1, 1 are respectively hooked onto these pulleys 3, 3. In FIG. 5, a roller 2 is equipped with a pulley 3 at its centre, and a fixed width conveyor belt 1 is hooked onto this pulley 3.

In both embodiments, protrusions 1a, 1a formed on the rear surface of the conveyor belt 1, and holes 3a, 3a formed around the periphery of the pulley 3 are meshed with each other.

The protrusions 1a and the holes 3a have peculiar shapes as shown in FIG. 2. Specifically, the protrusions 1a of the conveyor belt 1 comprise inwardly curved front and rear sides that taper towards the free end. In other words, the protrusions are shaped like the teeth of a chain sprocket. On the other hand, the holes 3a of the pulley 3 are shaped so as to fit the protrusions 1a.

By shaping the protrusions 1a of the conveyor belt 1 and the holes 3a of the pulley 3 as described above, the protrusions 1a of the conveyor belt 1 and the holes 3a of the pulley 3 that are shaped so as to fit the protrusions 1a drive the conveyor as they mesh with each other, preventing the conveyor 1 from meandering. Because the protrusions 1a of the conveyor 1 and the holes 3a of the pulley 3 are always meshed with each other, the belt tension remains constant and does not require adjustment.

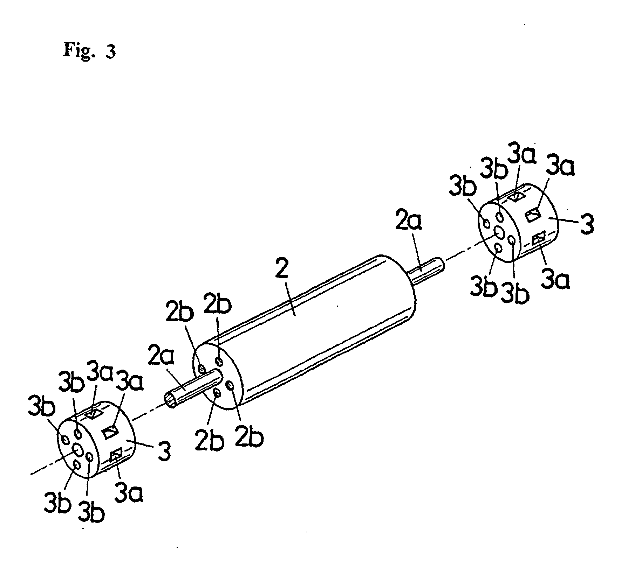

FIG. 3 shows an embodiment in which the pulley 3 is made of a separate unit that is detachable from the roller 2 and the pulley 3 is mounted onto the roller 2 via mounting bolts 4. The pulley 3 is mounted onto the shaft 2a that protrudes from the end of the roller 2, and the mounting bolts 4 are inserted through the insertion holes 3b of the pulley 3 and screwed into the threaded holes 2b of the roller 2, thereby attaching the pulley 3 to the roller 2.

In this way, the pulley 3 and the roller 2 can be manufactured separately, and the pulley 3 can be mounted onto the roller 2 easily. Moreover, the holes 3a of the pulley 3 can be made by pressing (burring), a process that simplifies the manufacture of parts.

As described above, the width of the conveyor 1 is fixed. FIG. 1 shows an example comprising fixed width conveyor belts 1, 1 without the aid of a different belt to compose a conveyor for carrying goods. As is evident from this example, it is easy to compose a conveyor for carrying goods using a fixed width conveyor belt 1 without the aid of a different type of belt.

On the other hand, FIGS. 4 and 5 show examples in which a conveyor for carrying goods comprising a fixed width conveyor belt 1 is fastened onto the rear surface of a flat belt 5. In FIG. 4, two fixed width conveyor belts 1, 1 are fastened onto the rear surface of a flat belt 5 so as to correspond to pulleys 3, 3 mounted at both ends of a roller 2. These conveyor belts 1, 1 are hooked onto the pulleys 3, 3 mounted at both ends of the roller 2. In FIG. 5, a fixed width conveyor belt 1 is fastened onto the rear surface of a flat belt 5 so as to correspond to a pulley 3 mounted in the middle of a roller. This conveyor belt 1 is hooked onto the pulley 3 positioned in the middle of the roller 2.

As described above, by fastening a fixed width conveyor belt 1 at a certain position on the rear surface of a flat belt 5, the same flat belt 5 can be used even if the mounting position of the pulley 3 is altered.

If this arrangement is not adopted, different flat belts with conveyor belts 1 arranged at different positions must be prepared for when the pulley 3 is arranged at the end of the roller 2 (in the case of FIG. 4) and for when the pulley 3 is arranged at the centre of the roller 2 (in the case of FIG. 5). But by fastening a fixed width conveyor belt 1 at a certain position on the rear surface of a flat belt 5, the same flat belt 5 can be used in either of the cases, making it possible to employ a common part for different applications.

As described above, on the rear surface of each conveyor belt 1, protrusions 1a, 1a each having inwardly curved front and rear sides that taper towards the free end are provided, and around the periphery of the pulley 3, holes 3a, 3a that are shaped so as to fit the protrusions 1a, 1a are provided.

### [EFFECTS OF THE INVENTION]

The invention described in claim 1 has the advantage of preventing the meandering of the conveyor 1. The invention also has the further advantage of preventing the belt tension from weakening, thereby eliminating the need for adjustment.

The invention described in claim 2 has advantages of allowing the pulley 3 and the roller 2 to be manufactured separately and of allowing the pulley 3 and the roller 2 to be assembled easily. Another advantage is that the holes 3a of the pulley 3 can be made by pressing (burring), a process that simplifies the manufacture of parts.

According to the invention described in claim 3, the same flat belt 5 can be used for embodiments having different pulley 3 positions.

## Claims

1. A belt conveyor comprising a conveyor belt (1) and a pulley (3), the rear surface of the conveyor belt (1) being provided with protrusions (1a), **characterized in that** each protrusion comprises inwardly curved front and rear sides tapering towards the free end, and the periphery of the pulley (3) is provided with holes (3a) that are shaped so as to fit the protrusions (1a).

2. A belt conveyor claimed in claim 1 further comprising a roller (2), in which the pulley (3) is a separate unit detachable from the roller (2).

3. A belt conveyor claimed in claim 1 or 2, in which the conveyor belt (1) having a fixed width is used alone or fastened at a certain position on the rear surface of a flat belt (5).

## Patentansprüche

1. Bandförderer mit einem Förderband (1) und einer Riemenscheibe (3), wobei die Rückseite des Förderbandes (1) mit Vorsprüngen (1a) versehen ist,
**dadurch gekennzeichnet, dass** jeder Vorsprung nach innen gekrümmte Vorder- und Rückseiten hat, die sich zum freien Ende hin verjüngen, und der Umfang der Riemenscheibe (3) mit Löchern (3a) versehen ist, die so geformt sind, dass sie zu den Vorsprüngen (1a) passen.

2. Bandförderer nach Anspruch 1, weiterhin mit einer Walze (2), wobei die Riemenscheibe (3) eine separate Baueinheit ist, die von der Walze (2) lösbar ist.

3. Bandförderer nach Anspruch 1 oder 2, bei dem das Förderband (1) mit einer feststehenden Breite allein oder an einer bestimmten Position an der Rückseite eines flachen Bandes (5) befestigt, verwendet wird.

## Revendications

1. Convoyeur à bande comprenant une bande transporteuse (1) et une poulie (3), la surface arrière de la bande transporteuse (1) étant munie de saillies (1a), **caractérisé en ce que** chaque saillie comprend des côtés avant et arrière courbés vers l'intérieur s'effilant vers l'extrémité libre, et la périphérie de la poulie (3) est munie de trous (3a) qui sont formés de manière à recevoir les saillies (1a).

2. Convoyeur à bande selon la revendication 1, comprenant en outre un rouleau (2), dans lequel la poulie (3) est une unité distincte séparable du rouleau (2).

3. Convoyeur à bande selon la revendication 1 ou 2, dans lequel la bande transporteuse (1) ayant une largeur fixe est utilisée seule ou fixée dans une certaine position sur la surface arrière d'une bande plate (5).
